# EUROPEAN PATENT APPLICATION

(11) **EP 2 792 328 A1**
(43) Date of publication of application: **22.10.2014**
(21) Application number: 12857861.4
(22) Date of filing: 10.12.2012
(51) Int. Cl.: A61B 19/00, B25J 9/00, B25J 17/00

(54) **APPARATUS FOR CONTROLLING JOINT EXERCISE**

(30) Priority: 13.12.2011 KR 20110133783
(71) Applicant: Movasu, Inc., Seoul 110-450 (KR)
(72) Inventor: JEONG, Chang Wook, Seoul 110-450 (KR); SIN, Chun Chol, Seoul 110-450 (KR)
(74) Representative: Zardi, Marco
(86) International application number: PCT/KR2012/010704
(87) International publication number: WO 2013/089399

(57) **Abstract**

The present invention relates to a joint motion control apparatus. According to one aspect of the invention, there is provided a joint motion control apparatus, comprising: an annular unit; and a rotating unit to guide and fix a wire such that the wire causes joint motion of an instrument according to the rotation thereof, wherein the annular unit comprises a first fixing unit and a second fixing unit, and wherein the rotating unit carries out sliding operation in a pitch or yaw direction via a sliding assistance member disposed with respect to the first or second fixing unit.

## Description

### FIELD OF THE INVENTION

The present invention relates to a joint motion control apparatus.

### BACKGROUND

Joint motion refers to the movement of at least one of two or more interconnected (mechanical) elements relative to the other ones. Such joint motion may be observed in various forms from human arms or legs to robotic arms of an industrial robot.

Conventionally, in order to configure a mechanical instrument such as a surgical instrument, a joint motion control apparatus (i.e., an apparatus for manipulating or controlling an end effector or the like of the instrument to carry out joint motion) has been frequently used, which has ball and socket structures that mainly rely upon the surface friction between two mechanical elements, as disclosed in Korean Patent Application No. 2011-3192 of the applicant(s) (the contents of which are to be regarded as being incorporated herein by reference in its entirety). Although such a joint motion control apparatus causes the joint motion of the instrument by the action of wires, there has been little attention paid to addressing the gathering or twisting of the wires. Further, the above joint motion control apparatus has disadvantages such as high cost of manufacturing the ball and socket structures and various collateral problems occurring when the surface friction is generated between the balls and sockets.

Herein, the inventor(s) thus present a novel joint motion control apparatus.

### SUMMARY OF THE INVENTION

One object of the present invention is to solve all the above problems in prior art.

Another object of the invention is to address the gathering or twisting of wires employed for joint motion of an instrument.

Yet another object of the invention is to reduce the cost of manufacturing a joint motion control apparatus.

According to one aspect of the invention to achieve the objects as described above, there is provided a joint motion control apparatus, comprising: an annular unit; and a rotating unit to guide and fix a wire such that the wire causes joint motion of an instrument according to the rotation thereof, wherein the annular unit comprises a first fixing unit and a second fixing unit, and wherein the rotating unit carries out sliding operation in a pitch or yaw direction via a sliding assistance member disposed with respect to the first or second fixing unit.

In addition, there may be further provided other configurations according to the technical idea of the invention.

According to the invention, the gathering or twisting of wires employed for joint motion of an instrument is addressed.

According to the invention, the cost of manufacturing a joint motion control apparatus is reduced.

### BRIEF DESCRIPTION OF THE DRAWINGS

FIG. 1 shows the front of a joint motion control apparatus 100 according to one embodiment of the invention.
FIG. 2 shows the rear of the joint motion control apparatus 100 according to one embodiment of the invention.
FIG. 3 shows that a rotating unit 120 of the joint motion control apparatus 100 shown in FIG. 1 has operated in a pitch direction.
FIG. 4 is an enlarged view of some components in FIG. 3.

### DETAILED DESCRIPTION OF THE PREFERRED EMBODIMENTS

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the locations or arrangements of individual components within each embodiment may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, preferred embodiments of the present invention will be described in detail with reference to the accompanying drawings to enable those skilled in the art to easily implement the invention.

Meanwhile, it should be understood that the term "connection" herein encompasses direct connection or indirect connection (i.e., via separate components) between mechanical or other types of components.

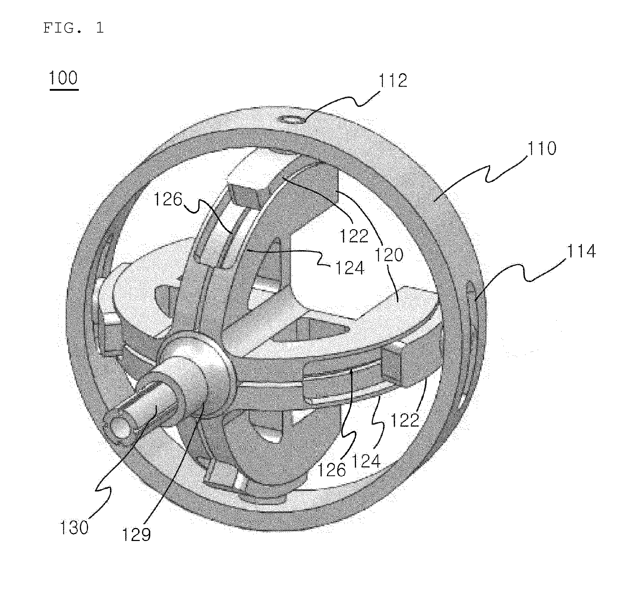

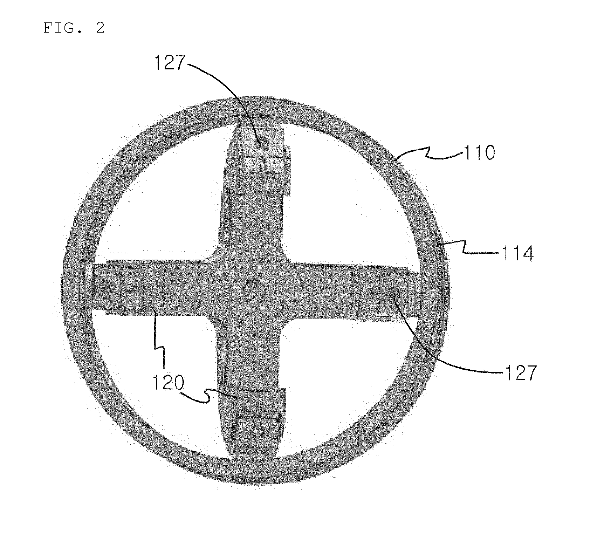

FIG. 1 shows the front of a joint motion control apparatus 100 according to one embodiment of the invention. Further, FIG. 2 shows the rear of the joint motion control apparatus 100 according to one embodiment of the invention.

Reference will be made to FIGs. 1 and 2. The joint motion control apparatus 100 may comprise an annular unit 110; a rotating unit 120 abutting the inside (alternatively, the outside) of the annular unit 110 to guide and fix wires (not shown) such that the wires cause joint motion of an instrument (i.e., joint motion caused by pulling the wires connected to an end effector (not shown) or the like of the instrument) according to the rotation thereof; and a linear guide unit 130 to further guide the wires guided by the rotating unit 120 to the end effector or the like.

First, in the same manner as an external rotating drum as disclosed in Korean Patent Application No.2011-3192 of the applicant(s), the annular unit 110 may be a component on the basis of which a joint motion control element (in the present invention, the rotating unit 120) inside (alternatively, outside) the annular unit 110 operates in a pitch or yaw direction. (To serve as above, the annular unit 110 may be usually fixed, e.g., to a shaft (not shown) of a surgical instrument disclosed in the aforementioned Korean patent application or similar surgical instrument.) The annular unit 110 may comprise a pair of first fixing units 112 at one region and at another region opposite thereto. Further, the annular unit 110 may comprise a pair of second fixing units 114 at corresponding regions in the direction substantially perpendicular to the direction in which the pair of first fixing units 112 are formed. As illustrated, the first fixing unit 112 may be an insertion hole or insertion groove into which a part of a sliding assistance member 122 of the rotating unit 120 to be described below may be inserted (preferably, a hole that allows the sliding assistance member 122 to only carry out rotational motion), and the second fixing unit 114 may be an insertion groove or insertion hole into which a part of the sliding assistance member 122 of the rotating unit 120 may be inserted (preferably, a groove that allows the sliding assistance member 122 to only carry out translational motion along the groove and rotational motion). According to the preferred embodiments, the rotating unit 120 may smoothly operate not only in one of the pitch and yaw directions but also in a midway direction.

Next, the rotating unit 120 may be a component to guide and fix wires such that the wires cause joint motion of an instrument according to the rotation thereof. The rotating unit 120 may comprise (four) sliding assistance members 122, (four) sliding grooves 124, (four) wire guide grooves 126, (four) wire fixing holes 127, and a wire guide unit 129. (The exemplary numbers in parentheses may be changed as necessary by those skilled in the art.)

As illustrated, each of the sliding assistance members 122 may be disposed with respect to the corresponding one of the pair of first fixing units 112 and the pair of second fixing units 114 to assist the rest of the rotating unit 120 to carry out sliding operation in the pitch or yaw direction. To this end, the rotating unit 120 may be provided with the sliding grooves 124 corresponding to the respective sliding assistance members 122. Meanwhile, each of the wire guide grooves 126 may be formed in the same direction as the corresponding one of the (four) sliding grooves 124, from the wire fixing hole 127 (preferably disposed at the rear side of the rotating unit 120) to the wire guide unit 129 (preferably disposed at the front end of the rotating unit 120). Although not illustrated, it is apparent that a pitch wire or yaw wire may be fixed to the wire fixing hole 127 (by means of binding or the like) and then guided within the wire guide groove 126 and passed to the wire guide unit 129. The wire guide unit 129 may collect each wire guided by each wire guide groove 126 as above such that they are guided and passed to the linear guide unit 130 to be described below.

Lastly, the linear guide unit 130 may be a linear component to guide and pass the wires guided and passed from the wire guide unit 129 to an end effector or the like of the instrument. The linear guide unit 130 may be included within a separate shaft, and may also function as a torque transmission member. In some cases, the linear guide unit 130 may be omitted.

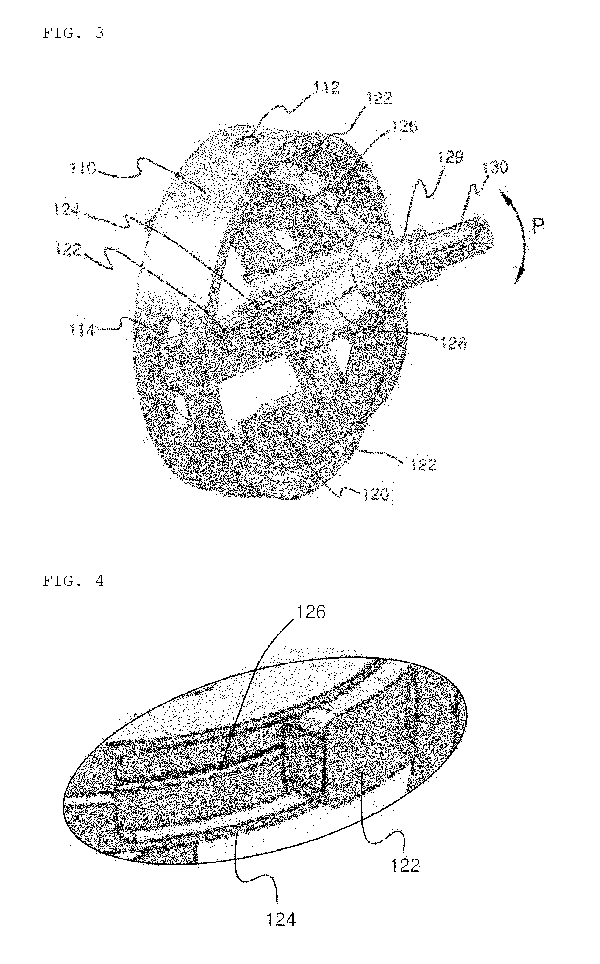

FIG. 3 shows that the rotating unit 120 of the joint motion control apparatus 100 shown in FIG. 1 has operated in the pitch direction.

The illustrated state of the pitch direction (P) operation of the rotating unit 120 may result when the rotating unit 120 receives an external torque by means of a separate component not shown in the drawing. In this case, some of the sliding grooves 124 of the rotating unit 120 may have carried out sliding operation with respect to the corresponding sliding assistance members 122. (In connection with the state of such sliding operation, further reference may be made to the enlarged view of FIG. 4.) Meanwhile, the state of the sliding operation of the sliding grooves 124 may be locked as necessary, according to the principle of fixing a joint structure as disclosed in Korean Patent Application No. 2011-80182 of the applicant(s) (the contents of which are to be regarded as being incorporated herein by reference in its entirety).

Although the present invention has been described in terms of specific items such as detailed components as well as the limited embodiments and the drawings, they are only provided to help general understanding of the invention, and the present invention is not limited to the above embodiments. It will be appreciated by those skilled in the art that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A joint motion control apparatus, comprising:
an annular unit; and
a rotating unit to guide and fix a wire such that the wire causes joint motion of an instrument according to the rotation thereof,
wherein the annular unit comprises a first fixing unit and a second fixing unit, and
wherein the rotating unit carries out sliding operation in a pitch or yaw direction via a sliding assistance member disposed with respect to the first or second fixing unit.

2. A joint motion control apparatus as claimed in Claim 1, wherein the wire comprises a pitch wire and a yaw wire.

3. A joint motion control apparatus as claimed in Claim 1, wherein the first fixing unit is an insertion hole and the second fixing unit is an insertion groove.

4. A joint motion control apparatus as claimed in Claim 1, wherein the rotating unit comprises a sliding groove to carry out sliding operation with respect to the sliding assistance member.

5. A joint motion control apparatus as claimed in Claim 1, wherein the rotating unit comprises a wire guide groove and the wire is guided within the wire guide groove.

6. A joint motion control apparatus as claimed in Claim 5, wherein the wire is collected at the front end of the rotating unit and further guided.

7. A joint motion control apparatus as claimed in Claim 1, wherein the rotating unit comprises a wire fixing hole and the wire is fixed to the wire fixing hole.
